# EUROPEAN PATENT APPLICATION

(11) **EP 3 061 603 A1**
(43) Date of publication of application: **31.08.2016**
(21) Application number: 16156524.7
(22) Date of filing: 19.02.2016
(51) Int. Cl.: B32B 18/00, C04B 37/00, C04B 35/14, C04B 35/56, C04B 35/563, C04B 35/565, C04B 35/58, C04B 35/583, C04B 35/584, C04B 35/628, C04B 35/80, F01D 5/28, F01D 9/02, F01D 9/04, F01D 11/08, F01D 25/16, F01D 25/24, F02K 1/82, F02K 9/97, F23R 3/00

(54) **CMC LAMINATE STRUCTURE FABRICATED USING CHEMICAL VAPOR INFILTRATION (CVI)**

(30) Priority: 27.02.2015 US 201514633347
(71) Applicant: General Electric Company, Schenectady, NY 12345 (US)
(72) Inventor: WEAVER, Jared Hogg, Niskayuna, New York 12309-1027 (US); RAMAMURTHI, Badri Narayan, Niskayuna, New York 12309-1027 (US)
(74) Representative: Pöpper, Evamaria

(57) **Abstract**

A preform can be subject 10 to chemical vapor infiltration (CVI) to define a ceramic matrix composite (CMC) structure 203, a supplemental preform 302 can be added 20 to the CMC structure to define an expanded structure 402 and CVI can be performed 40 using the expanded structure. The adding of a supplemental preform and performing CVI using the expanded structure can be repeated.

## Description

The present disclosure relates to laminate structures generally and particularly to laminate structures fabricated using chemical vapor infiltration.

### BACKGROUND

For fabrication of ceramic matrix composite (CMC) structures using chemical vapor infiltration (CVI) a preform can be provided. A preform can include fibers which can be *e.g*., in the form of unidirectional plies or woven. In one form the fibers can be ceramic based and can be formed of SiC. A preform can be placed into a CVI reaction chamber. Within the reaction chamber at an elevated temperature the preform can be exposed to certain gases. On being exposed to the certain gases at an elevated temperature, a reaction can occur and solid material termed matrix can be deposited on fibers of the preform.

Ceramic matrix composites (CMCs) made using chemical vapor infiltration (CVI) can potentially be used at temperatures of up to and greater than 2700°F. One of the key limitations of a CVI CMC structure is that the structure can contain significant porosity (*e.g*., 15% and more). The porosity can increase with thickness and can significantly impact both the in-plane and inter-laminar properties, and overall oxidation resistance of the composite.

### BRIEF DESCRIPTION

According to a method set forth herein, a preform can be subject to chemical vapor infiltration (CVI) to define a ceramic matrix composite (CMC) structure, a supplemental preform can be added to the CMC structure to define an expanded structure and CVI can be performed using the expanded structure. The adding of a supplemental preform and performing CVI using the expanded structure can be repeated zero or more times.

A resulting laminate structure can feature increased average density throughout its thickness and more uniform density throughout its thickness relative to a single layer structure fabricated according to a process having a single CVI stage.

### BRIEF DESCRIPTION OF THE DRAWINGS

Fig. 1 is flow diagram illustrating fabrication of a laminate structure;
Fig. 2 is a perspective view of a preform (preform structure);
Fig. 3 is a cross sectional view taken along line A-A of Fig. 2 with a density profile for the cross section;
Fig. 4 is a cross sectional view taken along line A-A of Fig. 2 after the structure of Fig. 2 is subject to CVI to define a processed structure with a density profile for the processed structure;
Fig. 5 is a perspective assembly view illustrating a laminate structure in one embodiment;
Fig. 6 is a cross sectional view taken along line B-B of Fig. 5 after the laminate structure of Fig. 5 is subject to CVI to define a processed laminate structure with a density profile for the laminate structure;
Fig. 7 is a perspective assembly view illustrating a laminate structure in one embodiment;
Fig. 8 is a cross sectional view taken along line C-C of Fig. 7 after the laminate structure of Fig. 7 is subject to CVI to define a processed laminate structure with a density profile for the laminate structure;
Figs. 9 and 10 illustrate the structure fabricated using the method described with reference to Figs. 7-8 and using an alternative process control;
Fig. 11 is a diagram illustrating a method of fabricating a structure using a specific shape;
Fig. 12 is a diagram illustrating a method of fabricating a structure having a specified shape.

### DETAILED DESCRIPTION

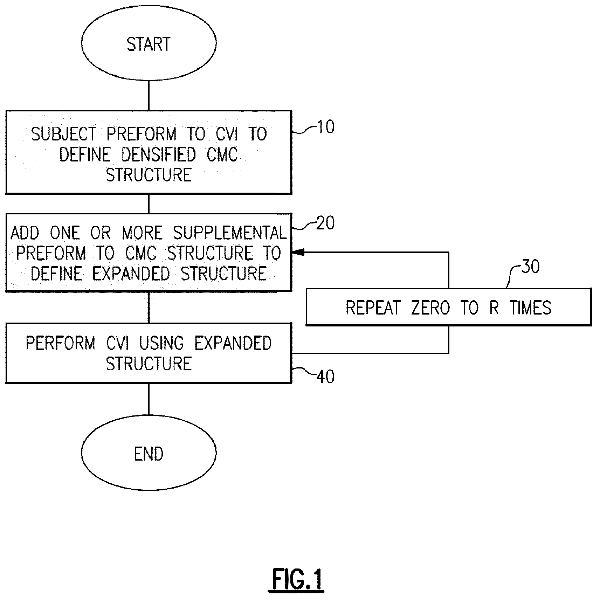

Referring to Fig. 1 there is set forth a method of fabricating a laminate structure including a plurality of layer structures. At block 10 a preform can be subject to chemical vapor infiltration (CVI) to define a ceramic matrix composite structure. At block 20 a supplemental preform can be added to the CMC structure to define an expanded structure. At block 40 CVI can be performed using the expanded structure. Blocks 20 and 40 can be repeated (block 30) zero or more times. Advantages of the method of Fig. 1 are described with reference to various illustrative examples as are set forth herein.

A resulting structure of a certain thickness M fabricated using the iterative method of Fig. 1 wherein multiple preforms are subject to CVI processing in iterative stages can have an increased average density and a more uniform density relative to an alternative method wherein a single preform having a thickness of about M is subject to CVI to define a processed structure having the certain thickness of about M.

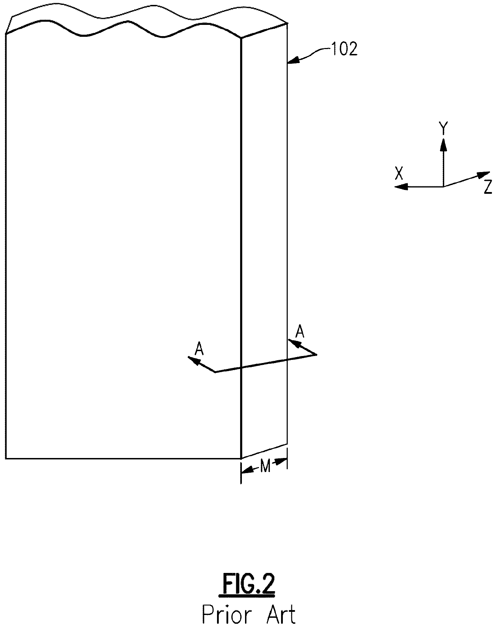

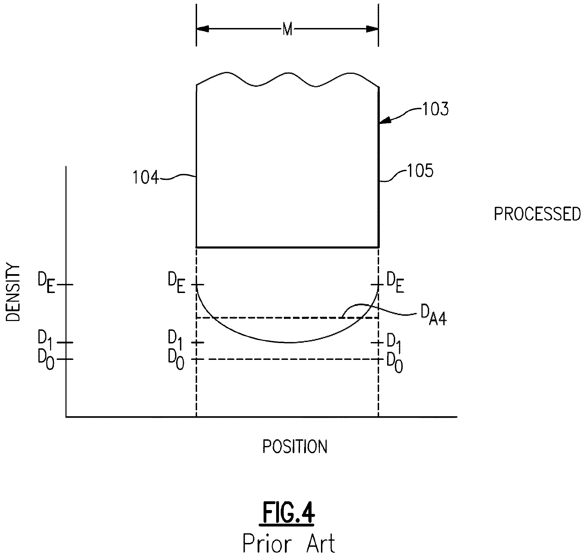

Various features and aspects are set forth herein in reference to Figs. 2-4 showing a prior art fabrication method for fabricating a CMC structure having a thickness of about M using CVI. In a fabrication method set forth in reference to Figs. 2-4 a preform 102 (Fig. 2) having a thickness of about M can be subject to CVI in a single CVI processing stage to define a CMC structure 103 (Fig. 4) having a thickness of about M. The CMC structure 103 (Fig. 4) can have a higher density but reduced density uniformity relative to the preform 102 (Fig. 2).

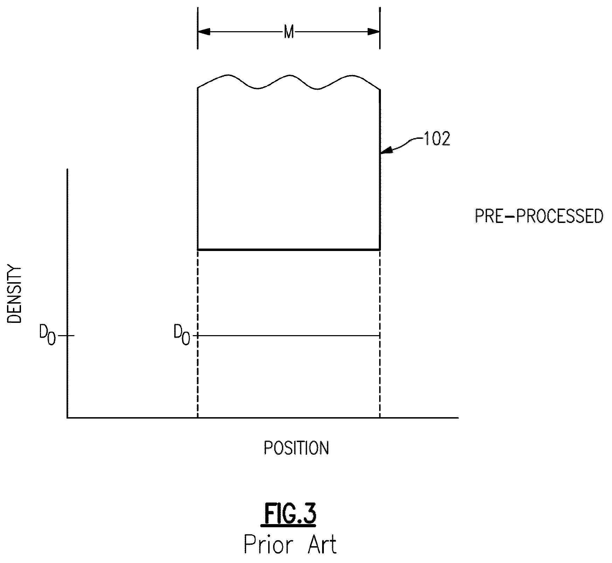

Fig. 2 shows a perspective view of a preform 102. Preform 102 shown in Fig. 2 can have an X, Y and Z (thickness dimension) as depicted by the illustrated coordinate axis. In the embodiment depicted in Fig. 2, preform 102 can have a thickness of about M in a direction parallel to the illustrated Z axis. Fig. 3 shows preform 102 in a pre-processed stage and an associated density profile for preform 102 in a pre-processed stage. At an upper portion of Fig. 3 there is shown a cross sectional view of structure 102 taken along line A-A of Fig. 2 in a direction parallel to a Z axis (thickness dimension). At a lower portion of Fig. 3 there is shown density plot of the density of the material of preform 102 in a pre-processed stage throughout a thickness of preform 102. In the pre-processing stage (Fig. 3) it is seen that the structure 102 has a substantially uniform density of D₀.

Fig. 4 illustrates the structure 102 of Figs. 2 and 3 after being subject to CVI. On being subject to CVI, structure 102 of Figs. 2 and 3 defines a densified ceramic matrix composite (CMC) structure 103 as depicted in Fig. 4. In Fig. 4 there is shown an associated density profile for densified CMC structure 103 in a processed stage through a thickness of structure 103 (in a direction parallel to the illustrated Z axis). Referring to Fig. 4 a minimal density of densified CMC structure 103 (post CVI structure) is D₁ whereas a minimal density of structure 102 as illustrated in Fig. 3 (structure 102 prior to performance of CVI) is the substantially uniform density D₀. Further referring to Fig. 4, a density of densified CMC structure 103 (after performance of CVI) can be non-uniform throughout a thickness of densified CMC structure 103. At a center thickness of densified CMC structure 103, structure 103 can have a density of D₁, D₁ >D₀ whereas toward surface 104 and surface 105 of densified structure 103 the structure 103 can have the density D_{E}, D_{E}>D₁. When CVI is commenced, pores proximate surface 104 and surface 105 tend to close thus limiting the extent of densification that can be performed toward a center thickness of densified CMC structure 103.

It was observed that large dips in density of a fabricated CMC structure fabricated using CVI can be disadvantageous. It was also observed that it can be advantageous to provide a CMC structure with substantially uniform density throughout its thickness. The method set forth in reference to Fig. 1 can provide various advantages. For example, using the method set forth in Fig. 1, a CMC structure having the thickness M can be fabricated that can include an increased density and density uniformity relative to densified CMC structure 103 fabricated using the method set forth in Figs. 2-4.

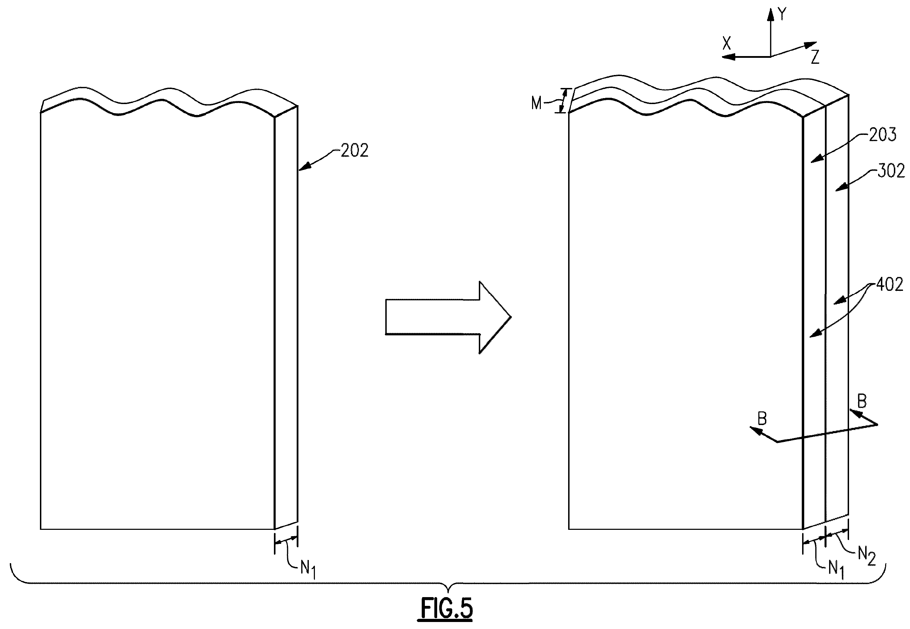

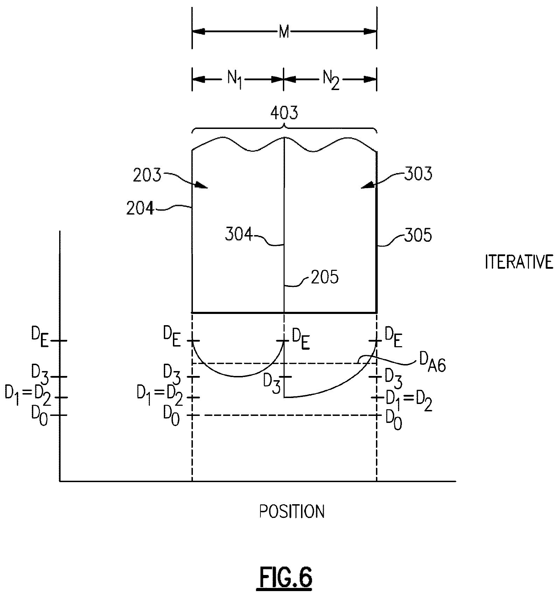

Referring to block 10 and the perspective view of Fig. 5 a structure 202 having a thickness N₁ can be subject to CVI to define densified CMC structure 203. Referring to block 20 and Fig. 5, a supplemental preform 302 having thickness N₂, N₂<M can be added to densified CMC structure 203 to define an expanded structure 402 having a thickness of about M. Binder material of preform 302 can serve to hold preform 302 in position relative to CMC structure 203 when preform 302 is added to CMC structure 203. Referring to block 40 and Fig. 5 the expanded structure 402 can be subject to CVI to define a densified CMC structure 403 (Fig. 6). Densified CMC structure 403 can include densified CMC structure 203 defined by subjecting preform 202 to CVI and densified CMC structure 303 defined by subjecting preform 302 to CVI. Densified CMC structure 403 can have an overall thickness of about M.

Referring to Fig. 6, an upper portion of Fig. 6 illustrates a cross sectional view taken along line B - B of Fig. 5 (the thickness dimension in a direction parallel to the Z axis) of structure 402 after being subject to CVI to define CMC structure 403. Referring to the lower portion of Fig. 6, the lower portion of Fig. 6 illustrates a density profile of the structure of Fig. 6 through a thickness of CMC structure 403 (in a direction parallel to Z axis).

Referring to Fig. 6, the density profile of densified CMC structure 203 is generally U shaped in accordance the densified CMC structure 103 in a processed stage with a minimal density at a center thickness of densified CMC structure 203 and increased density toward surfaces 204 and 205. Comparing the density profile of Fig. 6 to the density profile of Fig. 4, a minimal density of densified CMC structure 203 can be D₃ where D₃>D₁. The minimal center thickness density of densified CMC structure 203 can be greater than the minimal center thickness density of densified CMC structure 103 as a result of the thickness N₁ of structure 203 being less than the thickness M of structure 103. With a thickness of a preform subject to CVI being reduced, CVI densification can be more pronounced throughout a thickness of the structure being subject to CVI.

Referring further to Fig. 6, a density profile of densified CMC structure 303 can be generally ramp shaped and can be characterized by a generally increasing density throughout a thickness of structure 303 from first surface 304 to second surface 305. In the embodiment of Fig. 6, first surface 304 can be bordered by densified CMC structure 203 and second surface 305 can be exposed to gases when expanded structure 402 (Fig. 5) is subject to CVI processing. When CVI processing commences, pores proximate surface 305 (defining an end surface of CMC structure 403) tend to close to limit CVI densification at distances progressively away from surface 305. In the embodiment of Fig. 6, CMC structure 203 and CMC structure 303 can have thicknesses that are about equal, and CMC structure 303 can have a minimal density of D₂ where D₂ is about equal to D₁ (Fig. 4). Where N₂ is greater than N₁, D₂ can be less than D₁. Where N₂ is less than N₁, D₂ can be greater than D₁.

Comparing a density profile of structure 403 (thickness of about M) as illustrated in Fig. 6 fabricated by the iterative process of Fig. 1 to the density profile of the structure 103 (thickness of about M) in a processed stage as shown in Fig. 4 it is seen that the iterative fabrication process set forth herein wherein one or more CVI processing and structure adding stages can be performed iteratively can increase an average density of a structure as well as increase a density uniformity of the fabricated structure. An average density, D_{A6}, of CMC structure 403 as shown in Fig. 6 can be greater than D_{A4}, the average density of CMC structure 103 described with reference to Fig. 4. In another aspect CMC structure 403 as shown in Fig. 6 fabricated using the iterative fabrication method as shown in Fig. 1, can have a more uniform density than CMC structure 103 as shown in Fig. 4.

In one embodiment, a CMC structure having a more uniform density can be characterized by having a smaller difference between a maximum density and a minimum density through a thickness of a the CMC structure than a CMC structure having a less uniform density. In one embodiment, a CMC structure having a more uniform density can be characterized by having a smaller standard deviation of densities through a thickness of CMC structure than a CMC structure having a less uniform density.

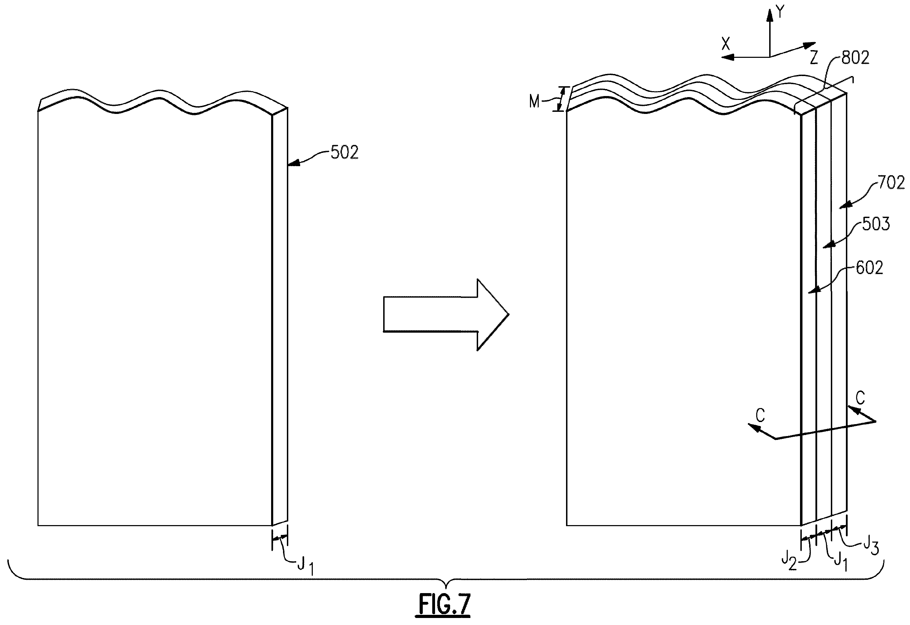

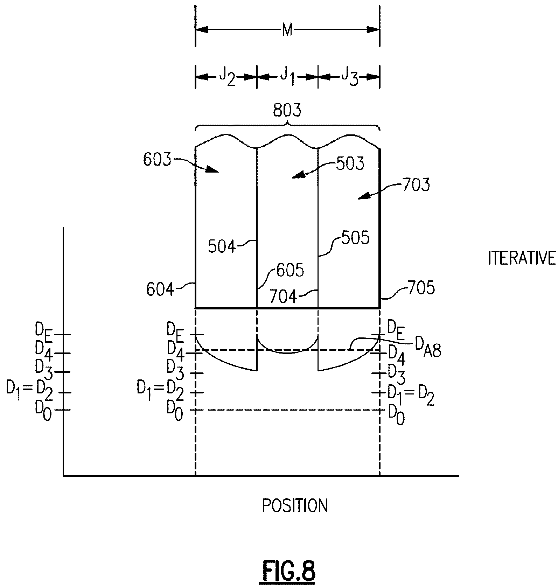

In one embodiment, an increase in average density of a CMC structure and in density uniformity of a CMC structure can be achieved by incorporating use of additional preforms in the iterative fabrication method set forth in reference to Fig. 1. In reference to Figs. 5-6, a method is described wherein first and second preforms having a combined thickness of M are used in an iterative CVI fabrication method. In the iterative CVI fabrication method of Figs. 7 and 8, first, second and third preforms having a combined thickness of M are used for fabrication of a CMC structure.

Referring to block 10 and the perspective view of Fig. 7 a preform 502 (left side of Fig. 7) having a thickness J₁ can be subject to CVI to define densified CMC structure 503 having thickness J₁ (right side of Fig. 7). Referring to block 20 and Fig. 7 (right side), supplementary preforms 602 and 702 having respective thicknesses J₂, J₂ < M, and J₃, J₃ < M can be added to densified CMC structure 503 to define an expanded structure 802 having a thickness of about M. Referring to block 40 and Fig. 7 the expanded structure 802 can be subject to CVI to define a densified CMC structure 803 (Fig. 8). In the specific example of Figs. 7-8, the thickness of preform structures 502, 602, 702 can be about equal. Each of the thicknesses J₁, J₂, and J₃ can be about M/3 in one example. In another example, the thicknesses J₁, J₂, and J₃ can be unequal.

Densified CMC structure 803 as shown in Fig. 8 can include densified CMC structure 603 defined by subjecting preform 602 to CVI, and densified CMC structure 703 defined by subjecting preform 702 to CVI as well as densified CMC structure 503. Densified CMC structure 803 can have an overall thickness of about M.

Referring further to Fig. 8, an upper portion of Fig. 8 illustrates a cross sectional view taken along line C - C of Fig. 7 (the thickness dimension in a direction parallel to the illustrated Z axis) of structure 802 after subjecting structure 802 to CVI to define CMC structure 803. Referring to the lower portion of Fig. 8, the lower portion of Fig. 8 illustrates a density profile of the structure of Fig. 8 through a thickness of CMC structure 803.

Referring to Fig. 8, the density profile of densified CMC structure 503 is generally U shaped in accordance the densified CMC structure 103 in a processed stage with a minimal density at a center thickness of densified CMC structure 503 and increased density toward surfaces 504 and 505. Comparing the density profile of Fig. 8 to the density profile of Fig. 6, a minimal density of densified CMC structure 503 can be D₄ where D₄ > D₃. The minimal center thickness density of densified CMC structure 503 can be greater than the minimal center thickness density of densified CMC structure 203 (Fig. 6) as a result of a thickness J₁ of structure 503 being less than the thickness N₁ of structure 203 (Fig. 6). With a thickness of a preform subject to CVI being reduced, CVI densification can be more pronounced throughout a thickness of the structure being subject to CVI.

Referring further to Fig. 8, a density profile of densified CMC structure 603 and densified CMC structure 703 can be generally ramp shaped and can be characterized by a generally increasing density from surface 605 to surface 604 and from surface 704 to surface 705. In the embodiment of Fig. 7, surface 605 and surface 704 can be bordered by densified CMC structure 503 whereas surface 604 and surface 705 can be exposed to gases when expanded structure 802 (Fig. 7) is subject to CVI processing. When CVI processing commences, pores proximate surface 605 and 705 (defining end surfaces of CMC structure 803) tend to close to limit CVI densification at distances progressively away from surface 604 and surface 705.

Comparing the density profile of Fig. 8 to the density profile of Fig. 6, CMC structure 803 as shown in Fig. 8 fabricated using two CVI stages can have a higher average density, D_{A8} than the average density, D_{A6}, of CMC structure 403 as shown in Fig. 6 fabricated using two CVI stages. In addition, CMC structure 803 (Fig. 6) can have improved density uniformity relative to CMC structure 403 (Fig. 6).

Comparing the density profiles of Figs. 8 and 6 to the density profile of Fig. 4 it can be seen that laminate CMC structure, *e*.*g*., structure 403 and structure 803, fabricated according to an iterative method set forth herein can have certain characteristics that can differentiate it from a structure, *e*.*g*., structure 103, fabricated using a single CVI stage.

Referring to the density profile of Fig. 4, a structure fabricated using a single CVI stage can have a continuous density profile. A density through a structure fabricated with a single CVI stage can be absent of a stepwise discontinuity in density through a thickness thereof. However, a laminate structure, *e*.*g*., structure 403 or structure 803, fabricated according to a method as set forth in Fig. 1 can have a discontinuous density profile. A density profile of a laminate structure fabricated according to a method as set forth in Fig. 1 can be characterized by transition wherein a density of a fabricated structure changes discontinuously stepwise to a greater or lesser density value.

In the particular embodiment illustrated with reference to Fig. 6, a set of densities through a thickness of structure 203 can define a U shape and a set of densities through a thickness of structure 303 can define a ramp shape. At an interface between surface 205 and surface 304 a density of structure 403 can be discontinuous and can change stepwise to a lesser value.

In the particular embodiment illustrated with reference to Fig. 8, a set of densities through a thickness of structure 503 can define a U shape and a set of densities through a thickness of structure 603 and through a thickness of structure 703 can define a ramp shape. At an interface between surface 605 and surface 504 a density of structure 803 can be discontinuous and can change stepwise to a greater value. At an interface between surface 505 and surface 704 a density of structure 803 can be discontinuous and can change stepwise to a lesser value.

There is set forth in reference *e.g.* to Fig. 8 a laminate structure 803, wherein a first CMC structure 503 has a first thickness having a U shaped density profile, and a second CMC structure 603 has a second thickness having a density profile that is not U shaped.

There is set forth in reference *e.g.* to Fig. 8 a laminate structure 803 wherein the laminate structure includes a center thickness section, a first end thickness section and a second end thickness section, wherein the center thickness section has a U shaped density profile, and the first end thickness section and the second end thickness section have ramp shaped density profiles.

Regarding preforms 202, 302, 502, 602, 702 for use with method of Fig. 1, preforms 202, 302, 502, 602, 702 can include unidirectional fibers (tows) in one embodiment. Regarding preforms 202, 302, 502, 602, 702 preforms, 202, 302, 502, 602, 702 can include woven fibers in one embodiment. The fibers can be provided by ceramic fibers. Ceramic fibers of preforms 202, 302, 502, 602, 702 can have a polycrystalline structure in one embodiment. In one embodiment, ceramic fibers of preforms 202, 302, 502, 602, 702 can include a non-stoichiometric chemical composition. In one embodiment, ceramic fibers of preforms 202, 302, 502, 602, 702 can include a stoichiometric chemical composition. In one embodiment, ceramic fibers of preforms 202, 302, 502, 602, 702 can be provided by single crystal fibers. In one embodiment, ceramic fibers of preforms 202, 302, 502, 602, 702 can be provided by amorphous fibers. In one embodiment, ceramic fibers of preforms 202, 302, 502, 602, 702 can include an inhomogeneous chemical composition. In one embodiment, ceramic fibers of preforms 202, 302, 502, 602, 702 can be provided by silicon carbide (SiC) fibers. In one embodiment, ceramic fibers of preforms 202, 302, 502, 602, 702 can be provided by polycrystalline SiC fibers. Preforms 202, 302, 502, 602, 702 can include a binder material that allows the preform to be shaped to a desired shape prior to being subject to CVI.

In one embodiment, ceramic fibers of preforms 202, 302, 502, 602, 702 can be provided to be stable at temperatures of over 1000 deg. C. In one embodiment, ceramic fibers of preform 202, 302, 502, 602, 702 can be absent of fiber coating. In one embodiment ceramic fibers of preform 202, 302, 502, 602, 702 can include a fiber coating. Such fiber coating can be intrinsic to a fiber or can be previously deposited *e*.*g*., deposited via CVI or by another process. Further regarding preforms set forth herein a preform as set forth herein, *e*.*g*., preform 202, 302, 502, 602, 702 can include one or more plies.

The porosity of preforms 202, 302, 502, 602, 702 in an unprocessed stage herein may vary. In one embodiment, preforms 202, 302, 502, 602, 702 can each have a substantially uniform porosity (*e*.*g*., 1/D₀) in an unprocessed stage prior to being subject to CVI of between about 20% to about 90% and accordingly a density of between about 80% to about 10%. In a more particular embodiment, preforms 202, 302, 502, 602, 702 can have a porosity of between about 40% to about 75% and accordingly a density of between about 60% to about 25%. Preforms 202, 302, 502, 602, 702 can be provided herein to include common material and structural characteristics, including common fiber material characteristics and porosity characteristics.

In the embodiments of Figs. 5-8, CVI processing can be performed so that each preform 202, 302, 502, 602, 702 subject to CVI can be transformed to a state of maximum densification, D_{E}, when subject to CVI. A state of maximum densification can be achieved when pores approaching an exposed surface of a preform are essentially closed to essentially prevent densification at a section spaced apart from an exposed surface. In the embodiments of Figs. 5-8, there are set forth simplified examples of the method of Fig. 1 for purposes of illustration. It will be understood that more complex structures can be provided by manipulating a densification for each new expanded structure (block 20). In such manner, porosity through a resulting CMC structure can be graded to optimize balance between processing time and properties of a resulting CMC structure.

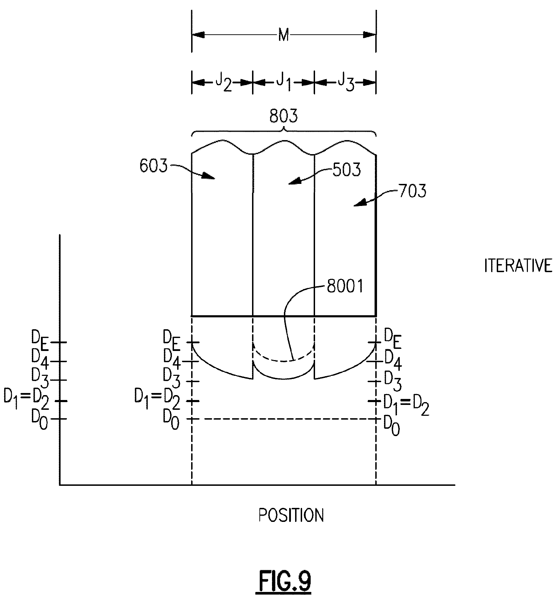

In another embodiment, CVI processes as set forth herein can be controlled so that densification of a structure of less than a maximum densification, D<D_{E}, can be provided. In the example of Fig. 9, Fig. 9 illustrates a structure fabricated by the method set forth in reference to Figs. 7 and 8 except with a different control when subjecting preform 502 to CVI.

In reference to Fig. 9, CVI processing of preform 502 can be stopped short of an infiltration level providing maximum densification, D_{E}, of defined CMC structure 503. Referring to Fig. 9, CVI of preform 502 can be provided so that defined CMC structure 502 has a maximum density of less than D_{E}. Referring to Fig. 9 in such embodiment, a densification through a thickness of CMC structure 503 can be provided to be U shaped but at a lower level of densification than as provided in the example of Fig. 8. The dashed plot 8001 of Fig. 9 illustrates the density profile of CMC structure 503 described with reference to Fig. 8. A processing indicated by Fig. 9 can be advantageous e.g., wherein it is desired to reduce a magnitude of a "jump" in densification between surface interfaces of structure 802 or where maximum density is not needed for thermal or mechanical properties.

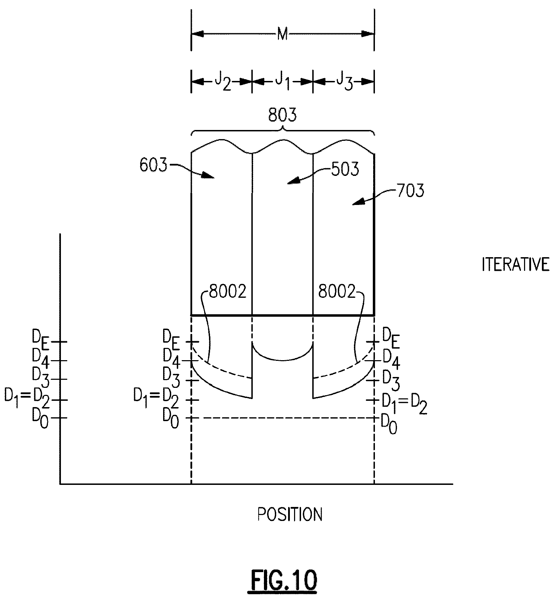

In reference to Fig. 10, CVI processing of preform 602 and preform 702 can be stopped short of an infiltration level providing maximum densification, D_{E}, of defined CMC structure 603 and defined CMC structure 703. Referring to Fig. 9 in such embodiment, a densification through a thickness of CMC structure 603 and structure 703 can be provided to be ramp shaped but at a lower level of densification than as provided in the example of Fig. 8. The dashed plots 8002 as shown in Fig. 10 illustrates the density profiles of CMC structures 603 and 703 described with reference to Fig. 8. A processing set forth in reference to Fig. 10 can be advantageous, e.g., wherein it is desired to provide a structure 803 having a higher densification at a center thickness section of structure 803 (*e.g*., through a thickness of structure 503) than at end thickness sections of structure 803 defining end surfaces 604 and 705 of structure 803.

There is set forth in reference *e.g.* to Fig. 10 a laminate structure 803, wherein the laminate structure includes a CMC structure *e*.*g*. structure 603 defining an end surface 604 of the laminate structure 803, wherein the CMC structure 603 defining an end surface 604 has a lower maximum density than a CMC structure *e*.*g*. structure 503 of the laminate structure that does not define an end surface of the laminate structure. In reference *e.g.* to Fig. 10, an end thickness section of the laminate structure 803 can have a lower maximum density than a center thickness section of the laminate structure 803.

As provided herein, a method of fabricating a laminate structure can include fabricating the laminate structure to include a specified shape. For providing a laminate structure to include a specified shape, a mold can be provided that includes one or more surface of the specified shape. In one example, at block 10 a preform can be placed into a mold (not shown) having one or more surface according to the specified shape and then CVI can be performed at block 10. The processed CMC structure resulting from performance of block 10 can define a CMC structure having a rigidized form that defines (partially or entirely) the specified shape. Regarding block 20 (add one or more supplemental preform) block 20 can be performed in one embodiment by adding one or more supplemental preform to the processed CMC structure resulting from performance of block 10 so that a rigid CMC structure resulting from the CVI processing at block 40 defines one or more surface of the specified shape. For performance of block 20, the processed CMC structure resulting from performance of block 10 can remain in the mold or alternatively can be removed from the mold.

For providing of a laminate structure to include a specified shape, a method in accordance with the flow diagram set forth in Fig. 1, in one embodiment can be performed without use of any mold. In one example, at block 10 a preform can be shaped into a desired specified shape without use of a mold and then CVI can be performed at block 10. Binder of the preform can aid in the shaping of the preform. The processed CMC structure resulting from performance of block 10 can define a CMC structure having a rigidized form that defines (partially or entirely) the specified shape. Regarding block 20 (add one or more supplemental preform) block 20 can be performed in one embodiment by adding one or more supplemental preform to the processed CMC structure resulting from performance of block 10 so that a rigid CMC structure resulting from the CVI processing at block 40 defines one or more surface of the specified shape.

In a particular embodiment, the specified shape to which a fabricated CMC structure is fabricated is that of a turbine component for use in a hot gas pathway. In a more particular embodiment, the turbine component can include, *e.g.,* a combustion liner, vane, blade, nozzle, bucket, transition piece, turbine center frame, or shroud. A component herein can be provided by an entire component or a section of a component.

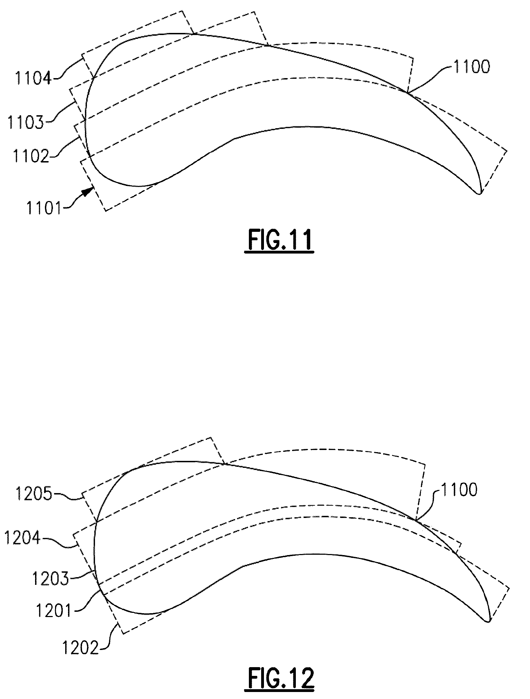

An example of the method of Fig. 1 being used for fabrication of a structure having a specified shape is described with reference to Fig. 11 in which depicted locations are relative locations. Referring to Fig. 11, the method of Fig. 1 can be used for fabrication of a structure having shape 1100. For fabrication of a structure having shape 1100, an initial preform subject to densification at block 10 can be shaped to be provided at location 1101, at which location a surface of the preform on being densified using CVI directly defines a surface of shape 1100. The preform can be shaped to be provided at location 1101 with or without use of a mold. The preform at location 1101 can be subject to densification (block 10) to define a rigid CMC structure at location 1101. A supplemental preform (block 20) can be added to the structure at location 1101 to define an expanded structure assuming the set of locations 1101 and 1102. The expanded structure can then be subject to CVI at block 40 to define a rigid CMC structure assuming the set of locations 1101 and 1102. A supplemental preform at location 1103 can be added to the structure at the set of locations 1101 and 1102 to define an expanded structure assuming the set of locations 1101 and 1102 and 1103. The expanded structure assuming the set of locations 1101, 1102, and 1103 can then be subject to CVI at block 40 to define a rigid CMC structure assuming the set of locations 1101, 1102, and 1103.

A supplemental preform at location 1104 can then be added to the structure at the set of locations 1101, 1102, and 1103 to define an expanded structure assuming the set of locations 1101, and 1102, 1103 and 1104. The expanded structure assuming the set of locations 1101, 1102, 1103, and 1104 can then be subject to CVI at block 40 to define a rigid CMC structure assuming the set of locations 1101, 1102, 1103, and 1104. Excess material outside of boundary of shape 1100 can then be subject to removal using machining processes.

Another example of the method of Fig. 1 being used for fabrication of a structure having a specified shape is described with reference to Fig. 12 at which depicted locations are relative locations. Referring to Fig. 12, the method of Fig. 1 can be used for fabrication of a structure having shape 1100. For fabrication of a structure having shape 1100, an initial preform subject to densification at block 10 can be shaped to be provided at location 1201, at which location the preform on being densified using CVI does not directly define surface of shape 1100. The preform can be shaped to be provided at location 1201 with or without use of a mold. The preform at location 1201 can be subject to densification to define a rigid CMC structure at location 1201.

A supplemental preform can be added to the structure at location 1202 and 1203 (block 20) to define an expanded structure assuming the set of locations 1201, 1202, and 1203. The expanded structure can then be subject to CVI at block 40 to define a rigid CMC structure assuming the set of locations 1201, 1202, and 1203. A supplemental preform at location 1204 can be added to the structure at the set of locations 1201, 1202, 1203 to define an expanded structure assuming the set of locations 1201, 1202, 1203, and 1204. The expanded structure assuming the set of locations 1201, 1202 and 1203 and 1204 can then be subject to CVI at block 40 to define a rigid CMC structure assuming the set of locations 1201, 1202, and 1203 and 1204. A supplemental preform at location 1205 can then be added to the structure at the set of locations 1201, 1202, 1203, and 1204 to define an expanded structure assuming the set of locations 1201, 1202, 1203, 1204 and 1205. The expanded structure assuming the set of locations 1201, 1202, 1203, 1204 and 1205 can then be subject to CVI at block 40 to define a rigid CMC structure assuming the set of locations 1201 1202, 1203, 1204, and 1205. Excess material outside of a boundary of shape 1100 can then be subject to removal using machining processes.

In each of the examples of Fig. 11 and Fig. 12 an initial structure subject to CVI at block 10 can be shaped so that a shape of the preform defines a shape 1100 of a fabricated structure. In one embodiment, a preform as set further herein, e.g., preform 202, 302, 502, 602, 707 can include a binder material that allows the preform to be shaped to a desired shape. In the example of Fig. 11, a shape of a preform at location 1101 can define a shape of a surface of shape 1100 by being disposed at a location so that when subject to densification via CVI, a surface of the densified structure assuming location 1101 directly defines a surface of a structure having shape 1100. In another example such as in the example of Fig. 12, a shape of an initial preform at location 1201 can define a shape of a surface of shape 1100 by being disposed at a location so that when one or more preform (*e.g*., at location 1202) supported by a CMC structure at location 1201 when densified via CVI directly defines a surface of shape 1100. In the example of Fig. 11, a shape of an initial preform subject to densification at block 10 directly defines a shape of a fabricated component having a specified shape 1100. In the example of Fig. 11, a shape of an initial preform subject to densification at block 10 indirectly defines a shape of a surface of a fabricated component having a specified shape 1100. In each of the examples of Fig. 11 and Fig. 12, a rigid CMC structure defined by densification of an initial preform (at location 1101 in the example of Fig. 11, at location 1201 in the example of Fig. 12) can function as a mold for use in shaping one or more additional preform.

Shape 1100 referred to in Figs. 11 and 12 can be a shape defining a turbine component, e.g., a combustion liner, vane, blade, nozzle, bucket, transition piece, turbine center frame, or shroud. Shape 1100 in the embodiments of Figs. 11 and 12 is a solid shape, *i.e*., having no hollowed portion. In another embodiment, shape 1100 can include a hollowed portion.

When a supplemental preform is added at block 20 the supplemental preform can be joined to the existing structure by way of forces provided *e*.*g*., by binder of the supplemental preform. Joining forces may be increased on performance of CVI processing at block 40.

For performance of CVI processing at block 10 and 40, a preform *e*.*g*., preform 202, 302, 502, 602, 702 can be introduced into a CVI treatment chamber reactor and an appropriate gas can be infiltrated through the preform, *e*.*g*., preform 202, 302, 502, 602, 702. Preform 202, 302, 502, 602, 702 can provide a reinforcement for a ceramic matrix composite (CMC) formed by subjecting a preform to CVI. An appropriate gas can include, *e*.*g*., any one of, or a mixture of two or more of, hydrogen, methyltrichlorosilane, boron trichloride, ammonia, trichlorosilane, molybdenum chloride, and a hydrocarbon gas. An appropriate gas can include any silane containing gas as well as any siloxane, silazane or other silicon containing gas as well as appropriate organometallic gases. Gas precursor compositions for various deposit chemistries are well known within the art. The gas within the CVI treatment chamber reactor can be absent a primary flow direction. Providing a gas within a chamber reactor to be absent a primary flow direction can reduce processing cost. The temperature within the chamber can be raised, and the reactant gases can undergo a chemical reaction at high temperature. During a reaction a matrix coating can be formed on surfaces of fibers of a preform, *e*.*g*., preform 202, 302, 502, 602, 702, to define a densified CMC structure, *e*.*g*., densified CMC structure 203, 303, 403, 503, 603, 703, 803. Where fibers of preform 202, 302, 502, 602, 702 are provided by an SiC fiber a matrix consisting of, *e.g.,* SiC, BN, B₄C, Si₃N₄, MoSi₂, SiO₂, SiOC, SiNC, and/or SiONC can be formed on fibers of the preform to define a densified CMC structure, *e*.*g*., structure 203, 303, 403, 503, 603, 703, 803 as set further herein. During performance of CVI processing in one embodiment a coating can be formed on fibers of a preform 202, 302, 502, 602, 702 prior to formation of a matrix.

Approximating language, as used herein throughout the specification and claims, can be applied to modify any quantitative representation that could permissibly vary without resulting in a change in the basic function to which it is related. Accordingly, a value modified by a term or terms, such as "about" is not to be limited to the precise value specified. The term "define" as set forth herein encompasses relationships where an element is partially defined as well as relationships where an element is entirely defined. In some instances, the approximating language can correspond to the precision of an instrument for measuring the value. Here and throughout the specification and claims, range limitations can be combined and/or interchanged; such ranges are identified and include all the sub-ranges contained therein unless context or language indicates otherwise. While the present disclosure has been described with reference to a number of specific embodiments, it will be understood that the true spirit and scope of the disclosure should be determined only with respect to claims that can be supported by the present specification. Further, while in numerous cases herein wherein systems and apparatuses and methods are described as having a certain number of elements it will be understood that such systems, apparatuses and methods can be practiced with fewer than or greater than the mentioned certain number of elements. Also, while a number of particular embodiments have been described, it will be understood that features and aspects that have been described with reference to each particular embodiment can be used with each remaining particularly described embodiment.

While only certain features of the disclosure have been illustrated and described herein, many modifications and changes will occur to those skilled in the art. It is, therefore, to be understood that the appended claims are intended to cover all such modifications and changes as fall within the scope of the claims.

Various aspects and embodiments of the present invention are defined by the following numbered clauses:
1. A method of fabricating a laminate structure, the method comprising:
   subjecting a preform to chemical vapor infiltration (CVI) to define a densified ceramic matrix composite (CMC) structure;
   adding a supplemental preform to the CMC structure to define an expanded structure;
   performing CVI using the expanded structure.
2. The method of clause 1, wherein the method includes repeating the adding and the performing.
3. The method of any preceding clause, wherein the method includes performing the method so that a resulting structure is shaped into a specified shape.
4. The method of any preceding clause, wherein the specified shape is of a turbine component.
5. The method of any preceding clause, wherein the turbine component is selected from the group consisting of a combustion liner, a vane, a blade, a nozzle, a bucket, a transition piece, a turbine center frame, and a shroud.
6. The method of any preceding clause, wherein performing the method so that the resulting structure is the specified shape of a turbine component includes using a mold.
7. The method of any preceding clause, wherein one or more of the preform or the supplemental preform include unidirectional fibers.
8. The method of any preceding clause, wherein the unidirectional fibers include a fiber coating.
9. The method of any preceding clause, wherein the unidirectional fibers include SiC.
10. The method of any preceding clause, wherein the preform and supplemental preform have an open porosity content of about 20% to about 80%.
11. The method of any preceding clause, wherein the performing CVI includes depositing a material selected from the group consisting of SiC, Si₃N₄, BN, B₄C, MoSi₂, SiO₂, SiOC, SiNC, and SiONC, within a porosity of the expanded structure.
12. The method of any preceding clause, wherein the method includes shaping the preform to define a shape of a surface of a turbine component.
13. The method of any preceding clause, wherein the method includes using the densified CMC structure as a mold to shape the supplemental preform.
14. The method of any preceding clause, wherein one or more of the subjecting or performing includes stopping infiltration short of an amount yielding maximum densification.
15. A laminate structure comprising:
   a first CMC structure joined to a second CMC structure adjacent to the first CMC structure;
   wherein a density profile of the first CMC structure is discontinuous with a density profile of the second CMC structure.
16. The laminate structure of any preceding clause, wherein the first CMC structure has a first thickness having a U shaped density profile, and the second CMC structure has a second thickness having a density profile that is not U shaped.
17. The laminate structure of any preceding clause, wherein the laminate structure includes a center thickness section, a first end thickness section and a second end thickness section, wherein the center thickness section has a U shaped density profile, and the first end thickness section and the second end thickness section have ramp shaped density profiles.
18. The laminate structure of any preceding clause, wherein a density at an interface between the first CMC structure and the second CMC structure is stepwise discontinuous.
19. The laminate structure of any preceding clause, shaped in a shape of a turbine component.
20. The laminate structure of any preceding clause, wherein the laminate structure includes a CMC structure defining an end surface of the laminate structure, wherein the CMC structure defining an end surface has a lower maximum density than a CMC structure of the laminate structure that does not define an end surface of the laminate structure.
21. The laminate structure of any preceding clause, wherein an end thickness section of the laminate structure has a lower maximum density than a center thickness section of the laminate structure.

## Claims

1. A method of fabricating a laminate structure, the method comprising:
subjecting (10) a preform to chemical vapor infiltration (CVI) to define a densified ceramic matrix composite (CMC) structure (203);
adding (20) a supplemental preform (302) to the CMC structure to define an expanded structure (402);
performing (40) CVI using the expanded structure.

2. The method of claim 1, wherein the method includes repeating (30) the adding and the performing.

3. The method of either of claims 1 or 2, wherein the method includes performing the method so that a resulting structure is shaped into a specified shape.

4. The method of claim 3, wherein the specified shape is of a turbine component.

5. The method of claim 4, wherein the turbine component is selected from the group consisting of a combustion liner, a vane, a blade, a nozzle, a bucket, a transition piece, a turbine center frame, and a shroud.

6. The method of either of claims 4 or 5, wherein performing the method so that the resulting structure is the specified shape of a turbine component includes using a mold.

7. The method of any preceding claim, wherein one or more of the preform or the supplemental preform include unidirectional fibers.

8. The method of claim 7, wherein the unidirectional fibers include a fiber coating.

9. The method of either of claims 7 or 8, wherein the unidirectional fibers include SiC.

10. The method of any preceding claim, wherein the preform and supplemental preform have an open porosity content of about 20% to about 80%.

11. The method of any preceding claim, wherein the performing (40) CVI includes depositing a material selected from the group consisting of SiC, Si₃N₄, BN, B₄C, MoSi₂, SiO₂, SiOC, SiNC, and SiONC, within a porosity of the expanded structure.

12. The method of any preceding claim, wherein the method includes shaping the preform to define a shape of a surface of a turbine component.

13. A laminate structure comprising:
a first CMC structure joined to a second CMC structure adjacent to the first CMC structure;
wherein a density profile of the first CMC structure is discontinuous with a density profile of the second CMC structure.

14. The laminate structure of claim 13, wherein the first CMC structure has a first thickness having a U shaped density profile, and the second CMC structure has a second thickness having a density profile that is not U shaped.
